# EUROPÄISCHE PATENTSCHRIFT

(11) **EP 1 680 300 B1**
(45) Veröffentlichungstag und Bekanntmachung des Hinweises auf die Patenterteilung: **05.03.2008**
(21) Anmeldenummer: 04790034.5
(22) Anmeldetag: 22.10.2004
(51) Int. Cl.: B60J 7/12

(54) **CABRIOLET-FAHRZEUG**
CABRIOLET CAR
V HICULE CABRIOLET

(30) Priorität: 24.10.2003 DE 10349820
(43) Veröffentlichungstag der Anmeldung: 19.07.2006
(73) Patentinhaber: Wilhelm Karmann GmbH, 49084 Osnabrück (DE)
(72) Erfinder: LIEDMEYER, Petra, 49509 Recke (DE); HOLLENBECK, Sven, 49492 Westerkappeln (DE)
(86) Internationale Anmeldenummer: PCT/DE2004/002361
(87) Internationale Veröffentlichungsnummer: WO 2005/039911

(56) Entgegenhaltungen:
- EP-A- 1 024 042
- DE-A1- 10 157 819
- DE-A1- 19 610 969

## Beschreibung

Die Erfindung betrifft ein Cabriolet-Fahrzeug mit zumindest einem Spannbügel nach dem Oberbegriff des Anspruchs 1 sowie ein zugehöriges Fahrzeugdach. Ein solches Cabriolet-Fahrzeug ist aus dem Dokument EP 1024042 bekannt.

Es sind zahlreiche Cabriolet-Fahrzeuge bekannt, die einen an einem metallischen Dachgestell gehaltenen flexiblen Dachbezug aufweisen, der in seinem hinteren Bereich an einen Spannbügel angebunden ist . Dieser liegt bei geschlossenem Dach auf einem Auflageteil der Karosserie - etwa einem beweglichen Deckelteil eines Verdeckkastens - auf und spannt dabei den Dachbezug, der im vorderen Bereich an einer starren Dachspitze gehalten sein kann. Zum Öffnen des Daches ist in einer ersten Bewegungsphase der Spannbügel zunächst aufwärts beweglich - so daß das Auflageteil öffnen kann - und anschließend abwärts beweglich in die ursprüngliche Schließstellung - nun allerdings nicht mehr von dem Auflageteil unterstützt - und daher weiter darüber hinaus nach unten in eine Schließstellung verlagerbar. Bei dieser Verlagerung hat der Spannbügel nur einen geringen Abwärtsschwenkwinkel zu durchlaufen, während etwa die ebenfalls um das Hauptlager schwenkbare Dachspitze um beispielsweise 180° über Kopf verschwenkt wird. Dabei ist der Spannbügel häufig nur durch die Spannung im Bezug gehalten und kann ansonsten ungebremst in den Verdeckkasten abwärts schwenken, wo er dann in einer frühen Phase des Dachschwenkens um das Hauptlager recht hart auf einem Widerlager im Verdeckkasten aufschlagen kann. In Kontaktstellung mit diesem Widerlager gleitet und scheuert der Spannbügel dann beim Nachschwenken der weiteren Dachteile zu ihrem Verstauen im Verdeckkasten über dieses, wobei sowohl das Widerlager als auch der Spannbügel selbst einem erhöhten Verschleiß, etwa Lackabtrag oder Abscheuern einer Kaschierung, ausgesetzt sind. Beim Schließen des Daches wird der Spannbügel in umgekehrter Richtung über das Widerlager gezogen, was bei einem Dachöffnungs- und Schließzyklus den Verschleiß verdoppelt.

Die DE 101 57 819 A1 zeigt einen Spannbügel mit zwei Bewegungszentren, wobei in einer ersten Bewegungsphase der Dachöffnung der Spannbügel nur um das erste Bewegungszentrum schwenkbar ist. In der folgenden Phase ist der Spannbügel dann gleichzeitig um das erste und das zweite Bewegungszentrum beweglich. Dabei sind zwei Hydraulikzylinder für die Bewegungen um die beiden Bewegungszentren erforderlich, wobei der erste Zylinder bei Bewegung um das zweite Zentrum in einer ausgezogenen Stellung mit Hydrauliköl beaufschlagt bleiben muß, um dabei nach Art eines starren Lenkers zu wirken. Der Installations- und Raumbedarf ist durch die zwei Antriebsorgane erheblich. Gleiches gilt für den Steuerungsaufwand.

Der Erfindung liegt das Problem zugrunde, bei einem Cabriolet-Fahrzeug mit einem hinteren Spannbügel eine einfach zu bewirkende Optimierung der Spannbügelverlagerung zu erreichen.

Die Erfindung löst dieses Problem durch ein Cabriolet-Fahrzeug mit den Merkmalen des Anspruchs 1 sowie durch ein bewegliches Fahrzeugdach mit den Merkmalen des Anspruchs 14. Hinsichtlich weiterer vorteilhafter Ausgestaltungen der Erfindung wird auf die abhängigen Ansprüche 2 bis 13 verwiesen.

Durch die Erfindung ist die Bewegung des Spannbügels um das erste Bewegungszentrum, das beim Aufwärts- und Rückbewegen des Spannbügels aus seiner Schließstellung auf dem geschlossenen Auflageteil bis in etwa diese Ebene zurück bei geöffnetem Auflageteil wirksam ist, begrenzt. Ein unkontrolliertes Weiterabwärtsschwenken des Spannbügels ist dadurch vermieden. Vielmehr tritt während der Abwärtsbewegung unter die Ebene der Schließstellung eine Hemmung der Bewegung um das erste Bewegungszentrum ein und stoppt dadurch die Fortsetzung dieser Bewegung nach unten hin. Dennoch ist nur ein Antriebsorgan für die Bewegung des Spannbügels ausreichend.

Insbesondere kann vorteilhaft die Hemmung der Bewegung rein mechanisch ohne einen Steuerungsaufwand erfordernde aktive Elemente erfolgen.

Wenn bei der Abwärtsverlagerung unter die Ursprungsebene der Spannbügel auf einem Anschlag aufliegt, kann er in der so abgestützten Stellung in den Verdeckkasten oder dergleichen Ablagestellung überführt werden, ohne daß er während dieser Bewegung verschleißfördernd über weitere Widerlager gleiten müßte.

Wenn die Aufwärts- und Rückbewegung des Spannbügels zum Öffnen des Auflageteils um eine Schwenkachse als erstes Bewegungszentrum verläuft, kann der Anschlag tangential zum Umfang des Schwenkkreises angeordnet sein, so daß der Spannbügel senkrecht auf ihn auftrifft und während der weiteren Abwärtsverlagerung keine Relativbewegung zwischen Spannbügel und Anschlag auftritt.

Eine vorteilhafte Beabstandung des Spannbügels zum Anschlag stellt dennoch bei geschlossenem Dach sicher, daß dem Spannbügel der volle Weg bis zur Auflage auf dem karosserieseitigen Auflageteil weiterhin zur Verfügung steht und daher die Spannung des geschlossenen Daches von der Erfindung unbeeinflußt verbleiben kann.

Bei einer Vermittlung der Abwärtsverlagerung über ein Viergelenk kann während dieser Verlagerung eine Übersetzung zwischen einem Schwenkwinkel etwa eines seitlichen Rahmenteils des Daches, das einen großen Schwenkwinkel von deutlich über 90° auszuführen hat, und einem kleinen Schwenkwinkel des Spannbügels, der nur um weniger als 30° zu verlagern ist, erreicht werden. Dadurch kann der Spannbügel erst ganz am Ende der Ablagebewegung auf einer Abstützung aufsetzen, ohne daß es zu einer Relativbewegung zwischen diesen Teilen kommen muß.

Wenn dabei die Abstützung an einem dachseitigen Ausleger angeordnet ist, der sich vom Hauptlager heckseitig erstreckt, ist ein Ausgleich von Toleranzen aus der Dachfertigung bereits vor dessen Montage im Rohbau der Karosserie möglich. Dabei sind die Abstützungen besser zugänglich als in der Karosserie nach Aufsetzen des Daches. Zudem kann das Dach dann im justierten Zustand der Abstützungen als Fertigmodul zur Rohbaumontage angeliefert werden. Eine Ausrichtung an irgendwelchen weiteren Karosserieteilen, etwa im Boden des Verdeckkastens, ist komplett entbehrlich.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: einen mittleren Bereich eines erfindungsgemäßen Cabriolet-Fahrzeugs in schematischer, teilweise abgebrochener perspektivischer Ansicht bei vollständig geschlossenem Dach,
- Fig. 2: eine ähnliche Ansicht wie Fig. 1 bei beginnender Dachöffnung mit aufwärts bewegtem Spannbügel zur Freigabe eines Öffnungswegs für das Auflageteil, wobei das Dach der besseren Übersicht halber ohne Dachbezug gezeichnet ist,
- Fig. 3: eine ähnliche Ansicht wie Fig. 2 bei weiter fortschreitender Dachöffnung und nach Rückschwenken und nun dicht unter seiner Erstreckungsebene bei geschlossenem Dach stehendem Spannbügel,
- Fig. 4: eine ähnliche Ansicht wie Fig. 3 bei vollständiger Offenstellung des Daches und in abgesenkter Stellung auf seitlichen Abstützungen aufliegendem Spannbügel,
- Fig. 5: eine detaillierte Seitenansicht des Nahbereichs des Hauptlagers, etwa entsprechend dem Ausschnitt V in Fig. 1, wiederum ohne eingezeichneten Dachbezug, in der Ausgangsstellung des Spannbügels bei geschlossenem Dach,
- Fig. 6: eine ähnliche Ansicht wie Fig. 5 in der Bewegungsstellung nach Fig. 2 mit aufwärts bewegtem Spannbügel,
- Fig. 7: eine ähnliche Ansicht wie Fig. 6 nach Ende der Rückbewegung des Spannbügels und bei beginnendem Kontakt mit den seitlichen Anschlägen im Übergang zur Abwärtsverlagerung,
- Fig. 8: eine ähnliche Ansicht wie Fig. 7 während der fortschreitenden Abwärtsverlagerung,
- Fig. 9: eine ähnliche Ansicht wie Fig. 8 bei vollständig in Offenstellung abgelegtem Dach.

Das erfindungsgemäße Cabriolet-Fahrzeug 1 kann sowohl ein Zweisitzer als auch ein Cabriolet-Fahrzeug mit einem größeren Innenraum und etwa zwei Sitzreihen hintereinander sein.

Es umfaßt ein bewegliches Dach 2, das zumindest in seinem hinteren Bereich einen flexiblen Dachbezug 3 aufweist. Im gezeichneten Ausführungsbeispiel erstreckt sich der Bezug 3 über das gesamte bewegliche Dach 2.

Der Bezug 3 kann eine flexible und daher selbst faltbare Heckscheibe 4 umfassen. Sie kann auch starr ausgebildet sein und beispielsweise aus Kunststoff oder Glas bestehen.

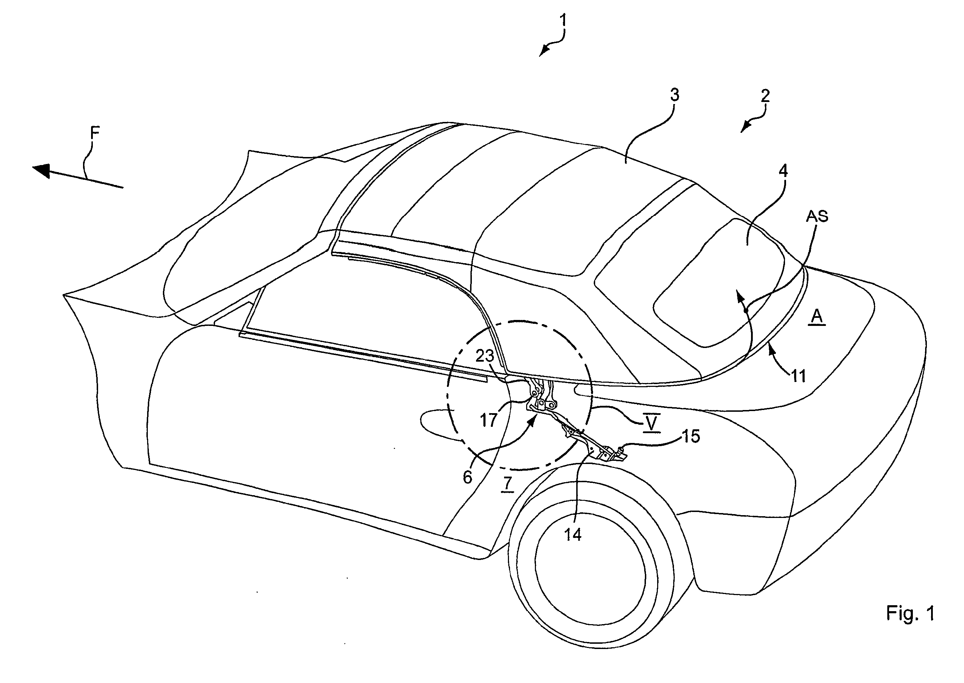

Der Dachbezug 3 ist von einem insgesamt mit 5 bezeichneten Dachgestänge untergriffen. Dieses ist über zwei seitliche Hauptlager 6 am Rohbau der Karosserie 7 zu befestigen. Das Dach 2 nimmt dann in geschlossener Stellung die in Figur 1 gezeichnete Lage ein. Die Gelenkachsen der Hauptlager 6 liegen horizontal und quer zum Fahrzeug 1, so daß das Dach 2 nach hinten wegschwenkbar oder durch verschiedenste Überlagerungen von translatorischen und rotatorischen Bewegungen zu seiner Öffnung abwärts verlagerbar ist.

Das Dachgestänge 5 umfaßt hier mehrere den Bezug 3 untergreifende und quer zum Dach 2 verlaufende Spriegel 8, 9, eine in sich starre Dachspitze 10, die parallel zu den Spriegeln 8, 9 verläuft, und einen in Draufsicht im wesentlichen U-förmigen hinteren Spannbügel 11, der einen quer erstreckten Mittelschenkel 12 und seitliche, in montierter Stellung im wesentlichen längs zum Fahrzeug 1 verlaufende Schenkel 13 umfaßt. Anstelle des einen durchgehenden hinteren Spannbügels 11 sind auch einzelne seitliche Spannbügel möglich, die sich zum Beispiel als spitzwinklig zulaufende Finnen heckwärts erstrecken können.

Des weiteren können sich von den Hauptlagern 6 des Dachgestänges 5 in den gleichen vertikalen Ebenen, in denen auch die Seitenschenkel 13 des Spannbügels 11 liegen, nach hinten unten weisende und weiter unten noch näher beschriebene Ausleger 14 erstrecken, die fest mit den starren Teilen des Dachgestänges 5 verbunden sind.

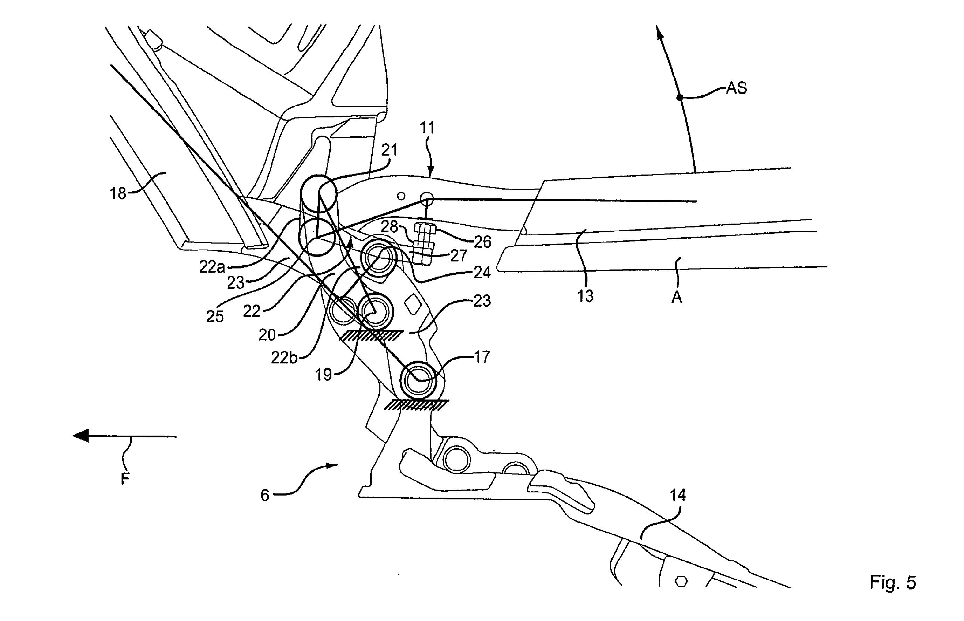

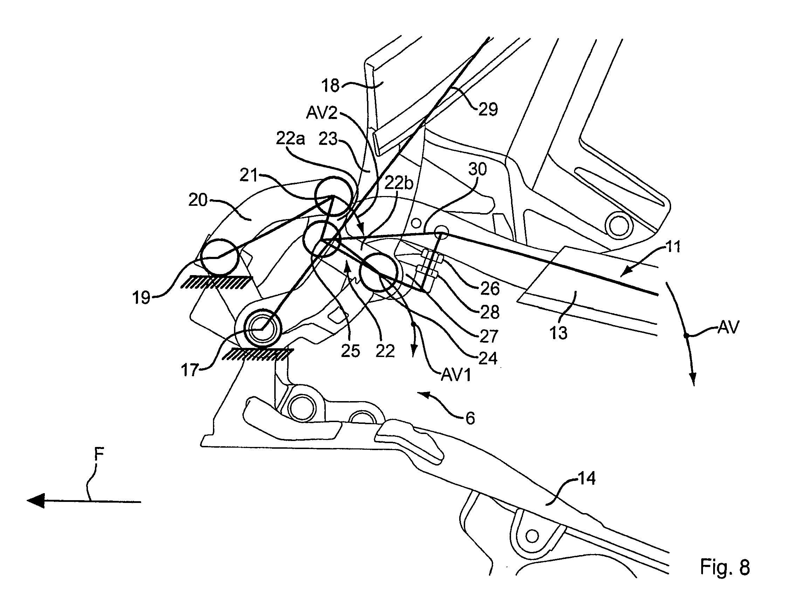

Ein an jeder Längsseite des Fahrzeugs 1 befindliches Hauptlager 6 ist im Detail in den Figuren 5 bis 9 dargestellt und umfaßt im einzelnen ein erstes karosseriefestes Schwenkgelenk 17, an dem ein als Hauptsäule des Daches 2 wirkendes seitliches Rahmenteil 18 mittelbar über ein Verbindungsstück 23 oder unmittelbar angelenkt ist, sowie ein zweites, in Fahrtrichtung F weiter vorne angeordnetes Schwenkgelenk 19, an dem ein kurzer Koppellenker 20 angelenkt ist. Beide Gelenke 17, 19 weisen quer zum Fahrzeug 1 und horizontal liegende Schwenkachsen auf.

Der Koppellenker 20 koppelt das karosserieseitige Gelenk 19 an seinem diesem abgewandten Ende 21 gelenkig mit einem in Seitenansicht L-förmigen Steuerlenker 22, der anderenends in einer fest an dem Verbindungsstück 23 der Hauptäule 18 zum Gelenk 17 liegenden gabelförmigen Aufnahme 24 gelenkig gehalten ist.

Die karosseriefesten Gelenke 17, 19 sowie die weiteren Gelenke 21 24 bilden somit ein viergelenk aus.

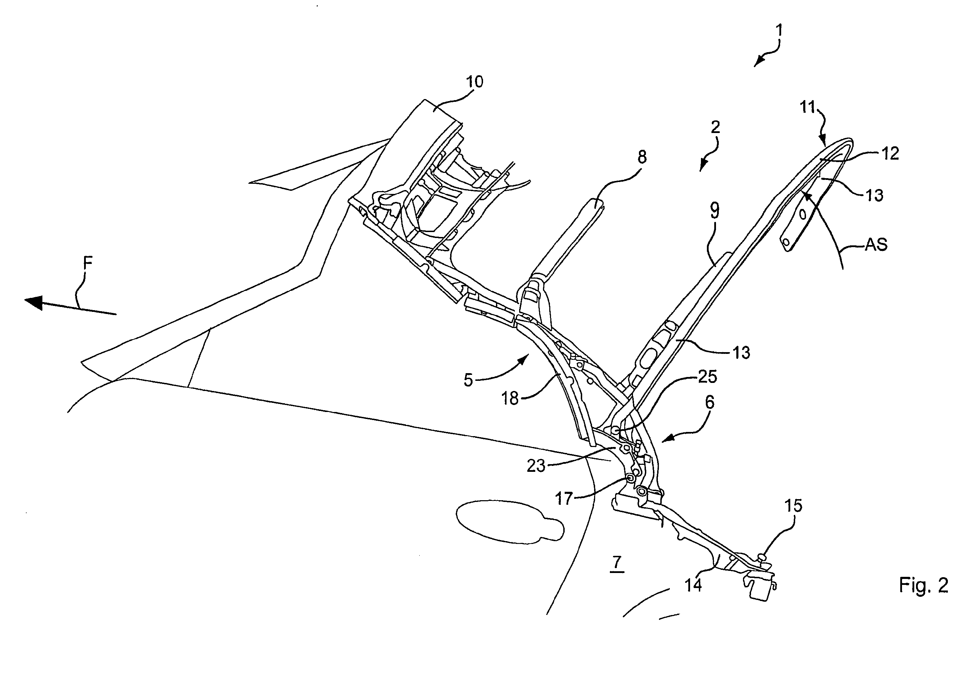

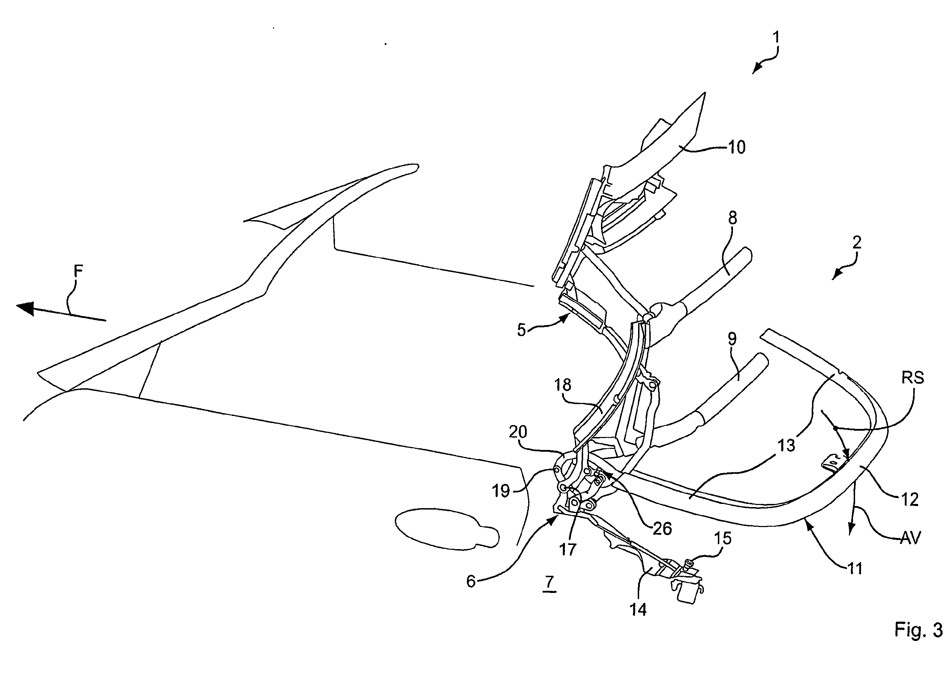

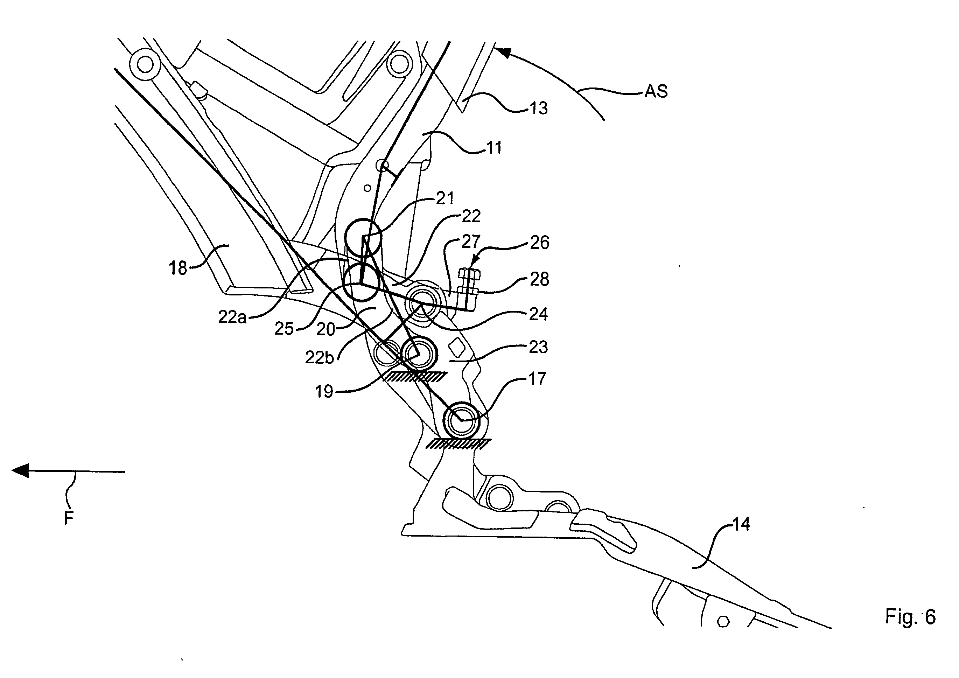

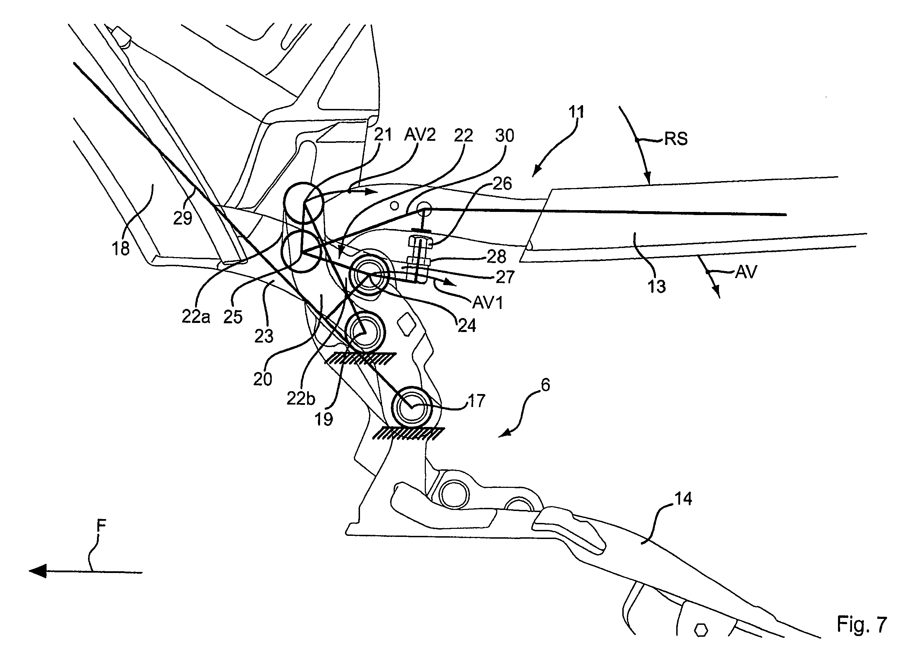

Der L-förmige Steuerlenker 22 trägt etwa im Knick zwischen dem bei geschlossenem Dach aufwärts ragenden kurzen Schenkel 22a und dem heckwärts weisenden langen Schenkel 22b ein Schwenkgelenk 25, dessen Achse als erstes Bewegungszentrum für das Aufwärts- und Rückschwenken AS, RS des davon im wesentlichen heckwärts weisenden Spannbügels 11 aus seiner auf dem Auflageteil A der Karosserie 7 liegenden Stellung (Fig. 1, Fig. 5) in die aufgestellte Stellung (Fig. 2, Fig. 6) und zurück in die ursprüngliche Ebene bei dann geöffnetem Auflageteil A (Fig. 3, Fig. 7) dient.

Der lange Schenkel 22b des Steuerlenkers 22 erstreckt sich zudem über das Gelenk 24 hinaus noch wenige Zentimeter heckwärts und trägt für die Hemmung der Bewegung als passives, mechanisches Element auf diesem Arm 27 zumindest einen Anschlag 26. Dieser kann über beispielsweise eine Rändelmutter 28 höhenverstellbar sein. Zudem kann er eventuell in seiner Neigung und in Längs- und/oder Querrichtung verstellbar sein.

Bei geschlossenem Dach 2 liegt der Spannbügel 11 stramm und unter Pressung einer Dichtung (nicht eingezeichnet) auf dem Auflageteil A der Karosserie 7 auf. Um hierbei einen hinreichenden Preßdruck erzeugen zu können, ist die Höhe des Anschlags 26 so einzustellen, daß der Spannbügel 11 in dieser Stellung zu den Anschlägen 26 beabstandet liegt (Fig. 5). Somit ist diese Stellung von der Erfindung nicht beeinflußt. Eine Auflage auf dem Anschlag 26, die den Preßdruck mindern könnte, ist bei geschlossenem Dach 2 vermieden.

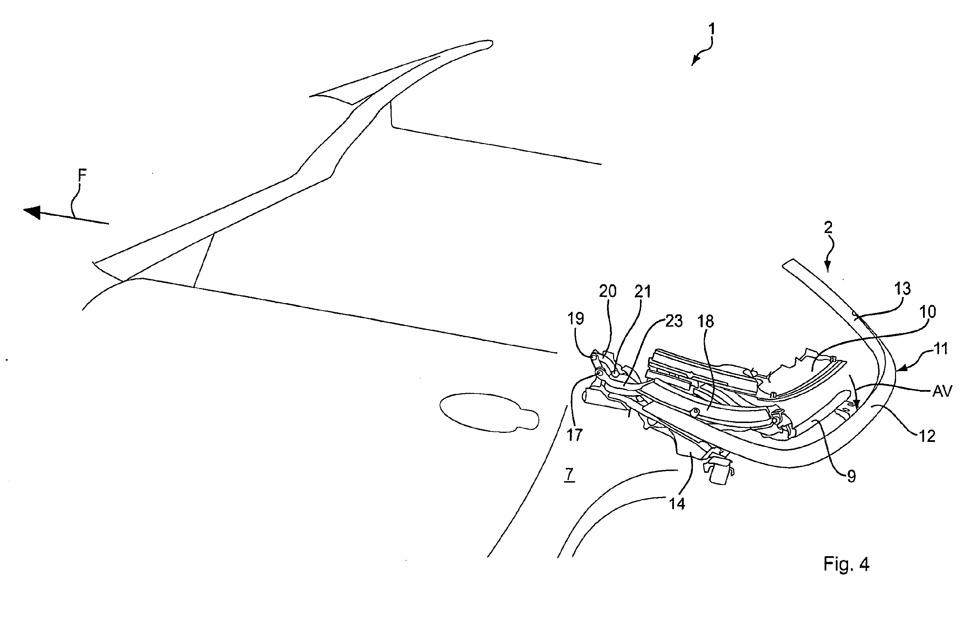

Neben dem genannten Arm 27 ist optional, wie oben schon angedeutet, an jeder Fahrzeugseite noch ein weiterer heckwärts weisender und erheblich längerer Ausleger 14 vorgesehen, der jeweils in seinem der Fahrtrichtung F entgegengesetzten freien Endbereich mit einer Abstützung 15 versehen ist, auf der der Spannbügel 11 bei geöffnetem Dach 2 aufliegt (Fig. 4). Diese Auflage läßt sich, da die Ausleger 14 Teil des Dachgestänges 5 sind, unabhängig von der Karosserie 7 einstellen, etwa vor Montage des Daches 2 auf dieser.

Die Abstützungen 15 sind oberseitig jeweils nach Art eines Puffers elastisch deformierbar. Die Abstützungen 15 können federnd gegenüber dem Ausleger 14 gelagert und zumindest höheneinstellbar sein. Auch eine Längs- oder Querverstellung der Abstützungen 15 kann ebenso wie eine Neigungsverstellung möglich sein.

Damit kann das Dach 2 vor Montage im Karosserierohbau etwa auf einem Bock an seinen Hauptlagern 6 vormontiert werden, so daß es dort geöffnet werden kann, wobei sich der Spannbügel 11 nach unten absenkt. Dabei können die Abstützungen 15 eingestellt werden.

Die so fertig eingestellte modulare Einheit kann dann an den Rohbau angeliefert und lediglich über die gegenüberliegenden Hauptlager 6 mit diesem verbunden werden, ohne daß hier noch weitere Arbeiten zur Dachjustage erforderlich wären.

In montierter Stellung ist der Bezug 3 des geschlossenen Daches 2 über die Dachspitze 10, Spriegel 8, 9 und den hinteren Spannbügel 11 gespannt.

Zur Dachöffnung hebt der Spannbügel 11 von seiner Auflagestellung auf einem Auflageteil A der Karosserie 7, etwa einem Verdeckkasten-deckel, in einer Aufwärtsschwenkbewegung um die Achse 25, die das erste Bewegungszentrum bildet, in Richtung des Pfeils AS ab (Fig. 2, Fig. 6).

Damit ist Raum für die Öffnung des Auflageteils A freigegeben, so daß sich nachfolgend in einer Rückschwenkbewegung in Richtung des Pfeils RS der Spannbügel 11 wieder in etwa in seine ursprüngliche Ebene bei geschlossenem Dach 2 bewegen kann, dann allerdings nicht mehr unterstützt von dem noch geöffneten Auflageteil A (Fig. 3, Fig. 7). Statt dessen erreicht der Spannbügel 11 am Ende der Rückbewegung RS den tangential zum Schwenkkreis um die Achse 25 stehenden Anschlag 26 (Fig. 7), der ein weiteres Abwärtsschwenken des Spannbügels 11 in Fortsetzung des Pfeils RS hemmt und unterbindet. Seine Bewegung um das erste Bewegungszentrum 25, das nicht zwingend eine einzige Schwenkachse sein muß, ist damit für den Verlauf der Dachöffnung beendet. Spannbügel 11 und Anschlag 26 verändern während der weiteren Öffnung ihre Lage zueinander nicht mehr, so daß zwischen diesen Teilen keine scheuernde Relativbewegung stattfinden kann. Während der geschilderten Bewegung AS, RS um die Achse 25 verbleibt das die Bewegung um ein zweites Bewegungszentrum vermittelnde Viergelenk 17, 19, 21, 24 vollständig unbewegt.

Die weitere Abwärtsverlagerung AV unterhalb der ursprünglichen Ebene des Spannbügels 11 bei geschlossenem Dach 2 schließt sich verzögerungsfrei an das Rückschwenken RS an: Hierfür werden die Hauptsäule 18 und der Koppellenker 20 um die beiden karosseriefesten Gelenke 17, 19 heckwärts und abwärts verschwenkt und bewegen dabei die Gelenke 21 des Koppellenkers 20 und 24 des Verbindungsstücks 23 auf Kreisbahnen AV1 und AV2 um die Gelenke 17, 19 mit (Fig. 7 bis Fig. 9). Der an dem zwischen den Gelenken 21 und 24 hängenden L-förmigen Steuerlenker 22 im Gelenk 25 gehaltene Spannbügel 11 wird bei dieser Abwärtsverlagerung AV in einer kombinierten, von einer Kreisbahn abweichenden Bewegung mit heckwärts und abwärts bewegt, allerdings dabei aufgrund der Viergelenksteuerung 17, 19, 21, 24 nur in einem sehr kleinen Winkel verschwenkt.

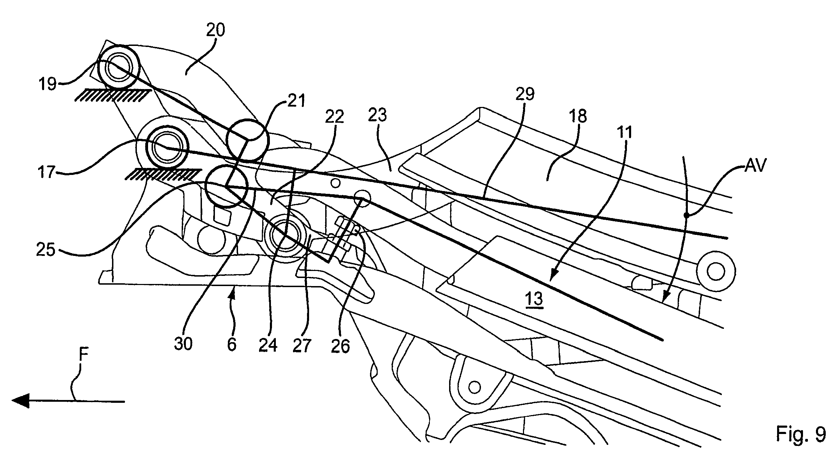

Dies wird beispielsweise deutlich bei Betrachtung des von dem Gelenk 17 in Richtung der Hauptsäule 18 ausgehenden Strahls 29, der im Übergang von Figur 7 zu Fig. 9 um beispielhaft etwa 140° verschwenkt wird, wohingegen der von dem Gelenk 25 in Richtung der Längsabschnitte 13 des Spannbügels 11 weisende Strahl 30 nur um etwa 20° verschwenkt wird. Damit ist erreicht, daß erst in der Endphase der Abwärtsbewegung der Spannbügel 11 von oben auf den Abstützungen 15 aufsetzt (Fig. 4) und auch dort keine verschleißfördernde Relativbewegung zwischen den Teilen 11 und 15 auftreten kann.

Das Viergelenk 17, 19, 21, 24 bewirkt daher eine Übersetzung zwischen den Schwenkbewegungen der verschiedenen Teile 18, 11 und verhindert, daß der Steuerlenker mit dem darauf über den Anschlag 26 in der Abwärtsverlagerung AV starr aufliegenden Spannbügel unkontrolliert nach unten fällt. Zudem ist die Abwärtsverlagerung AV des Sapnnbügels 11 kein reines Schwenken, sondern umfaßt eine heckwärts weisende Komponente, wohingegen die Bewegung der Hauptsäule 18 eine reine Schwenkbewegung AV1 um das Gelenk 17 ist.

Anstelle des Viergelenks 17, 19, 21, 24 sind auch andere Mehrgelenke, eventuell mit Kulissenführungen, möglich.

Die Erfindung ist sowohl bei Fahrzeugen mit manuell zu bewegenden Dächern auch bei voll- oder teilautomatischer Beweglichkeit des Daches 2 anwendbar.

## Patentansprüche

1. Cabriolet-Fahrzeug (1) mit einem zumindest im hinteren Bereich einen flexiblen Bezug (3) aufweisenden Dach (2), wobei der Bezug (3) im geschlossenen Zustand mittels zumindest eines Spannbügels (11) gegenüber der Karosserie (7) unter Spannung halterbar ist und der Spannbügel (11) zum Öffnen des Daches (2) aus einer auf einem geschlossenen Auflageteil (A) der Karosserie (7) liegenden Schließstellung zunächst aufwärts- (AS) und bei geöffnetem Auflageteil rückbeweglich (RS) und nachfolgend in eine unterhalb der Ebene des geschlossenen Auflageteils (A) liegende Offenstellung abwärts verlagerbar (AV) ist, **dadurch gekennzeichnet, daß** für die Aufwärts- und Rückbewegung (AS,RS) des Spannbügels (11) einerseits ein erstes Bewegungszentrum (25) und zu seinem Abwärtsverlagern (AV) andererseits ein hiervon getrenntes zweites Bewegungszentrum vorgesehen ist und während des Abwärtsverlagerns (AV) des Spannbügels (11) um das zweite Bewegungszentrum dessen Bewegung um das erste Bewegungszentrum (25) gehemmt ist.

2. Cabriolet-Fahrzeug (1) nach Anspruch 1 **dadurch gekennzeichnet, daß** die Hemmung der Bewegung rein mechanisch bewirkt ist.

3. Cabriolet-Fahrzeug (1) nach einem der Ansprüche 1 oder 2, **dadurch gekennzeichnet, daß** der Spannbügel (11) während seines Abwärtsverlagerns (AV) um das zweite Bewegungszentrum auf einem Anschlag (26) aufliegt und gegenüber diesem während der gesamten Abwärtsverlagerung (AV) unbeweglich ist.

4. Cabriolet-Fahrzeug (1) nach einem der Ansprüche 1 bis 3, **dadurch gekennzeichnet, daß** während des Aufwärts- und Rückschwenkens (AS,RS) des Spannbügels (11) eine Bewegung um das zweite Bewegungszentrum gehemmt ist.

5. Cabriolet-Fahrzeug (1) nach einem der Ansprüche 1 bis 4, **dadurch gekennzeichnet, daß** das erste Bewegungszentrum (25) eine Schwenkachse ist.

6. Cabriolet-Fahrzeug (1) nach einem der Ansprüche 1 bis 5, **dadurch gekennzeichnet, daß** die Abwärtsverlagerung (AV) um das zweite Bewegungszentrum von einem Viergelenk (17;19;21;24) vermittelbar ist.

7. Cabriolet-Fahrzeug (1) nach Anspruch 6, **dadurch gekennzeichnet, daß** das Viergelenk (17;19;21;24) zwei karosseriefeste Gelenke (17;19) umfaßt, von denen eines einen bei geschlossenem Dach (2) in Fahrtrichtung (F) vorwärts und aufwärts erstreckten seitlichen Säulenabschnitt (18) und das andere einen kurzen Koppellenker (20) schwenkbeweglich hält.

8. Cabriolet-Fahrzeug (1) nach Anspruch 7, **dadurch gekennzeichnet, daß** der Koppellenker (20) und die Dachsäule (18) über einen zwischen diesen liegenden und an beiden Teilen jeweils über Gelenke (21;24) angebundenen Steuerlenker (22) miteinander verbunden sind.

9. Cabriolet-Fahrzeug (1) nach Anspruch 8, **dadurch gekennzeichnet, daß** an dem Steuerlenker (22) das Bewegungszentrum (25) für die Aufwärts- und Rückbewegung (AS, RS) des Spannbügels (11) gehalten ist.

10. Cabriolet-Fahrzeug (1) nach einem der Ansprüche 8 oder 9, **dadurch gekennzeichnet, daß** dem Steuerlenker (22) ein heckwärts weisender Arm (27) zugeordnet ist, der einen Anschlag (26) zur Begrenzung der Bewegung des Spannbügels (11) um das erste Bewegungszentrum (25) trägt.

11. Cabriolet-Fahrzeug (1) nach Anspruch 10, **dadurch gekennzeichnet, daß** bei geschlossenem Dach (2) der Spannbügel (11) zum Anschlag (26) beabstandet liegt.

12. Cabriolet-Fahrzeug (1) nach einem der Ansprüche 10 oder 11, **dadurch gekennzeichnet, daß** zumindest die Höhe des Anschlags (26) einstellbar ist.

13. Cabriolet-Fahrzeug (1) nach einem der Ansprüche 1 bis 12, **dadurch gekennzeichnet, daß** der Spannbügel (11) in Offenstellung des Daches (2) auf einer oder mehreren Abstützung(en) (15) aufliegt, die an seitlichen Auslegern (14) gehalten sind, die mit einem den Bezug (3) untergreifenden Dachgestell (5) vor dessen Montage auf der Karosserie (7) verbunden sind.

14. Bewegliches Fahrzeugdach (2) für ein Cabriolet-Fahrzeug nach einem der Ansprüche 1 bis 13.

## Claims

1. A cabriolet vehicle (1) with a roof (2) which has a flexible covering (3) at least in the rear area, wherein the covering (3), in the closed state, is able to be fastened on under tension in respect of the car body (7) by means of at least one tension bracket (11) and the tension bracket (11), in order to open the roof (2), is firstly upwardly (AS) movable out of a closed position situated on a closed bearing part (A) of the car body (7) and, when the bearing part is open, is rearwardly (RS) movable, and is subsequently downwardly (AV) displaceable into an opened position situated beneath the plane of the closed bearing part (A), **characterised in that**, on the one hand, for the upward and rearward movement (AS, RS) of the tension bracket (11), there is provided a first centre of movement (25) and on the other hand, for the purposes of its downward displacement (AV), a second centre of movement separated from this is provided and, during the downward displacement (AV) of the tension bracket (11) around the second centre of movement, its movement around the first centre of movement (25) is blocked.

2. The cabriolet vehicle (1) according to claim 1, **characterised in that** the blocking of the movement is effected purely mechanically.

3. The cabriolet vehicle (1) according to one of claims 1 or 2, **characterised in that**, as it is displaced downwards (AV) around the second centre of movement, the tension bracket (11) bears on a stopper (26) and is immovable in respect of this during the entire downward displacement (AV).

4. The cabriolet vehicle (1) according to one of claims 1 to 3, **characterised in that**, during the upward and rearward pivoting (AS, RS) of the tension bracket (11), a movement around the second centre of movement is blocked.

5. The cabriolet vehicle (1) according to one of claims 1 to 4, **characterised in that** the first centre of movement (25) is a pivot axis.

6. The cabriolet vehicle (1) according to one of claims 1 to 5, **characterised in that** the downward displacement (AV) around the second centre of movement can be imparted by a four-bar hinge (17;19;21;24).

7. The cabriolet vehicle (1) according to claim 6, **characterised in that** the four-bar hinge (17;19;21;24) includes two hinges (17;19) which are attached to the car body and of which one holds a lateral column section (18) extending forwards and upwards in the direction of travel (F) when the roof (2) is closed and of which the other holds a short coupling rod (20) in a pivotably movable manner.

8. The cabriolet vehicle (1) according to claim 7, **characterised in that** the coupling rod (20) and the roof column (18) are connected to one another via a control rod (22) which is situated between these and which is respectively fastened at both parts via hinges (21 ;24).

9. The cabriolet vehicle (1) according to claim 8, **characterised in that** the centre of movement (25) for the upward and rearward movement (AS, RS) of the tension bracket (11) is held at the control rod (22).

10. The cabriolet vehicle (1) according to one of claims 8 or 9, **characterised in that** there is allocated to the control rod (22) a rearwardly pointing arm (27) which bears a stopper (26) for limiting the movement of the tension bracket (11) around the first centre of movement (25).

11. The cabriolet vehicle (1) according to claim 10, **characterised in that**, when the roof (2) is closed, the tension bracket (11) is spaced apart from the stopper (26).

12. The cabriolet vehicle (1) according to one of claims 10 or 11, **characterised in that** it is possible to adjust at least the height of the stopper (26).

13. The cabriolet vehicle (1) according to one of claims 1 to 12, **characterised in that** the tension bracket (11), in the open position of the roof (2), bears on one or more support(s) (15) which are held at lateral extension arms (14) which are connected to a roof frame (5) underlying the covering (3) before this roof frame (5) is mounted on the car body (7).

14. A movable vehicle roof (2) for a cabriolet vehicle according to one of claims 1 to 13.

## Revendications

1. Véhicule cabriolet (1) avec un toit (2) présentant au moins dans la zone arrière une housse (3) flexible, la housse (3) pouvant être maintenue sous tension à l'état fermé par rapport à la carrosserie (7) à l'aide d'au moins un étrier de blocage (11) et l'étrier de blocage (11) pouvant être déplacé d'une position fermée reposant sur une partie de support (A) fermée de la carrosserie (7) d'abord vers le haut (AS) et, lorsque la partie de support est ouverte, vers l'arrière (RS) puis vers le bas (AV) dans une position ouverte reposant en dessous du plan de la partie de support (A) fermée pour ouvrir le toit (2), **caractérisé en ce qu'**un premier centre de déplacement (25) est prévu pour le déplacement vers le haut et vers l'arrière (AS, RS) de l'étrier de blocage (11) d'une part, et qu'un second centre de déplacement séparé du premier est prévu pour le déplacement vers le bas (AV) d'autre part et **en ce que** le déplacement de celui-ci autour du premier centre de déplacement (25) est entravé pendant le déplacement vers le bas (AV) de l'étrier de blocage (11) autour du second centre de déplacement.

2. Véhicule cabriolet (1) selon la revendication 1, **caractérisé en ce que** l'entrave du déplacement est obtenue de façon purement mécanique.

3. Véhicule cabriolet (1) selon l'une quelconque des revendications 1 ou 2, **caractérisé en ce que** l'étrier de blocage (11) appuie sur une butée (26) pendant son déplacement vers le bas (AV) autour du second centre de déplacement et est immobile par rapport à celle-ci pendant l'ensemble du déplacement vers le bas (AV).

4. Véhicule cabriolet (1) selon l'une quelconque des revendications 1 à 3, **caractérisé en ce qu'**un déplacement autour du second centre de déplacement est entravé pendant le pivotement vers le haut et vers l'arrière (AS, RS) de l'étrier de blocage (11).

5. Véhicule cabriolet (1) selon l'une quelconque des revendications 1 à 4, **caractérisé en ce que** le premier centre de déplacement (25) est un axe de pivotement.

6. Véhicule cabriolet (1) selon l'une quelconque des revendications 1 à 5, **caractérisé en ce que** le déplacement vers le bas (AV) autour du second centre de déplacement peut être transmis par une quadruple articulation (17 ; 19 ; 21 ; 24).

7. Véhicule cabriolet (1) selon la revendication 6, **caractérisé en ce que** la quadruple articulation (17 ; 19 ; 21 ; 24) comprend deux articulations (17 ; 19) fixées à la carrosserie parmi lesquelles une maintient de façon mobile et pivotante une section de colonne (18) latérale s'étendant vers l'avant et vers le haut dans la direction de conduite (F) lorsque le toit (2) est fermé et l'autre maintient de façon mobile et pivotante un bras pivotant de couplage (20) court.

8. Véhicule cabriolet (1) selon la revendication 7, **caractérisé en ce que** le bras pivotant de couplage (20) et la colonne de toit (18) sont reliés entre eux par l'intermédiaire d'un bras pivotant de commande (22) reposant entre eux et raccordé aux deux parties respectivement par l'intermédiaire de rotules (21; 24).

9. Véhicule cabriolet (1) selon la revendication 8, **caractérisé en ce que** le centre de déplacement (25) pour le déplacement vers le haut et vers l'arrière (AS, RS) de l'étrier de blocage (11) est maintenu contre le bras pivotant de commande (22).

10. Véhicule cabriolet (1) selon l'une quelconque des revendications 8 ou 9, **caractérisé en ce qu'**un bras (27) orienté vers l'arrière est associé au bras pivotant de commande (22), ledit bras supportant une butée (26) pour limiter le déplacement de l'étrier de blocage (11) autour du premier centre de déplacement (25).

11. Véhicule cabriolet (1) selon la revendication 10, **caractérisé en ce que** l'étrier de blocage (11) repose à une certaine distance de la butée (26) lorsque le toit (2) est fermé.

12. Véhicule cabriolet (1) selon l'une quelconque des revendications 10 ou 11, **caractérisé en ce qu'**au moins la hauteur de la butée (26) est réglable.

13. Véhicule cabriolet (1) selon l'une quelconque des revendications 1 à 12, **caractérisé en ce que** l'étrier de blocage (11) appuie sur un ou plusieurs appuis (15) en position ouverte du toit (2), lesdits appuis étant maintenus contre des cantilevers (14) latéraux reliés à un châssis de toit (5) entrant en prise par en bas avec la housse (3) avant son montage sur la carrosserie (7).

14. Toit (2) de véhicule mobile pour un véhicule cabriolet selon l'une quelconque des revendications 1 à 13.
